(19) Europäisches Patentamt
European Patent Office
Office européen des brevets

(11) Veröffentlichungsnummer: **0 564 931 B1**

(12) **EUROPÄISCHE PATENTSCHRIFT**

(45) Veröffentlichungstag der Patentschrift: **15.03.95**

(21) Anmeldenummer: **93105083.5**

(22) Anmeldetag: **27.03.93**

(51) Int. Cl.⁶: **C08K 5/00**, C08L 75/04,
//(C08K5/00,5:3475,5:3477)

(54) **UV-Stabilisatorkonzentrate auf TPU-Basis, Verfahren zu ihrer Herstellung und ihre Verwendung.**

(30) Priorität: **04.04.92 DE 4211335**

(43) Veröffentlichungstag der Anmeldung:
**13.10.93 Patentblatt 93/41**

(45) Bekanntmachung des Hinweises auf die
Patenterteilung:
**15.03.95 Patentblatt 95/11**

(84) Benannte Vertragsstaaten:
**AT BE CH DE DK ES FR GB IT LI NL PT SE**

(56) Entgegenhaltungen:
**GB-A- 1 169 857**
**US-A- 4 935 275**

(73) Patentinhaber: **Elastogran GmbH**
**Landwehrweg**
**D-49448 Lemförde (DE)**

(72) Erfinder: **Prissok, Frank, Dr.**
**Moldestrasse 18**
**W-2844 Lemfoerde (DE)**
Erfinder: **Lehrich, Friedhelm, Dr.**
**Stöltingstrasse 10**
**W-2844 Lemfoerde (DE)**
Erfinder: **Lehr, Gerhard**
**Rottstrasse 12**
**W-6721 Schwegenheim (DE)**
Erfinder: **Glinka, Aleksander**
**Potsdamer Strasse 10**
**W-4500 Osnabrück (DE)**
Erfinder: **Harrop, Douglas John**
**Dielingen 102**
**D-32351 Stemwede (DE)**

(74) Vertreter: **Karau, Wolfgang, Dr. et al**
**BASF Aktiengesellschaft,**
**Patentabteilung ZDX - C 6**
**D-67056 Ludwigshafen (DE)**

**Beschreibung**

Gegenstand der Erfindung sind UV-Stabilisatorkonzentrate, die bestehen aus

A) 40 bis 80 Gew.-% mindestens eines thermoplastischen Polyurethans,

B) 10 bis 30 Gew.-% 1,3,5-Triglycidylisocyanurat und

C) 10 bis 30 Gew.-% 2-(2-Hydroxy-3,5-di-tert.amyl-phenyl)-2H-benztriazol oder 1,6-Hexandiyl-bis(3-((3-benzotriazol-N-yl)-4-hydroxy-5-tert.butyl)phenyl-propanoat,

ein Verfahren zu ihrer Herstellung und ihre Verwendung.

Zellige oder kompakte Polyurethan (PU)-Gießelastomere und thermoplastische Polyurethane, abgekürzt TPU genannt, sind seit langem aus zahlreichen Patent- und Literaturveröffentlichungen bekannt. Ihre technische Bedeutung beruht auf der Kombination hochwertiger mechanischer Eigenschaften mit den Vorteilen der kostengünstigen Verarbeitungsmethoden. Durch die Verwendung verschiedenartiger chemischer Aufbaukomponenten in unterschiedlichen Mengenverhältnissen können thermoplastisch verarbeitbare oder vernetzte, kompakte oder zellige PU-Elastomere hergestellt werden, die sich hinsichtlich ihrer Verarbeitbarkeit und ihren mechanischen Eigenschaften vielfältig unterscheiden. Eine Übersicht über PU-Elastomere, ihre Eigenschaften und Anwendungen wird z.B. im Kunststoff-Handbuch, Band 7, Polyurethane, 1. Auflage, 1966, herausgegeben von Dr. R. Vieweg und Dr. A. Höchtlen, und 2. Auflage, 1983, herausgegeben von Dr. G. Oertel (Carl-Hanser-Verlag, München, Wien) gegeben.

PU-Gießelastomere können durch Einbringen, z.B. durch Gießen oder Einspritzen, einer Reaktionsmischung in ein offenes oder geschlossenes Formwerkzeug und ihre Aushärtung erhalten werden.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-A-1 057 018 wird aus einer im wesentlichen linearen Polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130°C erhitzten Ofen geführt, bis es erstarrt. Das Reaktionsprodukt wird danach zerkleinert, bei Temperaturen bis 120°C 6 bis 40 Stunden getempert und kann so z.B. mit Spritzgußmaschinen zu Formkörpern verarbeitet werden.

Beim Extruderverfahren, das z.B. in der DE-A-20 59 570 (US-A-3 642 964) beschrieben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während die nach dem Bandverfahren ein opakes Aussehen aufweisen. Opake TPU können zu Folien verarbeitet werden, die kein Blocken zeigen, während transparente TPU hierfür ungeeignet sind.

Zur Herstellung von TPU können die an sich bekannten Aufbaukomponenten, vorzugsweise difunktionellen Aufbaukomponenten, Verwendung finden. Beispielhaft genannt seien höhermolekulare Polyhydroxylverbindungen, die die sogenannte Weichphase bilden, z.B. Polyoxyalkylen-glykole, wie Polyoxypropylen-, Polyoxyethylen-, Polyoxypropylen-polyoxyethylen-, Polyoxybutylen-, Polyoxybutylen-polyoxyethylen- oder Polyoxybutylenpolyoxypropylen-glykole oder Polyesterdiole wie Alkandiolpolyadipate, aromatische oder aliphatische Diisocyanate wie z.B. 4,4'-Diphenylmethan-diisocyanat (MDI) oder 1,6-Hexamethylen-diisocyanat (HDI) und niedermolekulare Kettenverlängerungsmittel zur Bildung der Hartsegmente, z.B. Alkandiole oder Dialkylen-glykole wie z.B. 1,4-Butandiol oder Diethylenglykol.

Unstabilisierte PU-Elastomere sind gegenüber Wärme und UV-Bestrahlung recht empfindlich, da sie zu Oxidationsreaktionen neigen. Hauptsächliche Reaktionszentren der Zersetzung von PU-Elastomeren auf Basis von Polyether- und Polyesterpolyolen sind die Urethanbindungen, insbesondere bei Einsatz aromatischer Diisocyanate, und bei Polyester-PU-Elastomeren, die Esterbindung, die im wesentlichen durch Protonen hydrolysiert werden, wobei sich die Zersetzung autokatalytisch beschleunigen kann sowie bei Polyether-PU-Elastomeren die Etherbindung, die in Gegenwart von Luft zu Peroxidgruppen oxidiert wird.

Zur Vermeidung dieser Nachteile werden den PU-Elastomeren oder den Aufbaukomponenten zu ihrer Herstellung Stabilisatoren einverleibt. Als Hydrolyseschutzmittel bewährt haben sich beispielsweise Carbodiimide (W. Goyert und H. Hespe, TPU-Eigenschaften und Anwendungen; Kunststoffe 68 (1978), Seiten 819 ff). Als geeignete Stabilisatoren gegen Thermooxidation werden Antioxidantien wie z.B. 4,4'-Thio-bis(3-methyl-6-tert.butylphenol),Phenothiazine und 2,2-Thio-bis-(4-methyl-6-isobornylphenol) beschrieben. Als UV-Stabilisatoren werden z.B. substituierte Resorcine, Salicylate, Benzotriazole und Benzophenone eingesetzt.

Verwendet werden ferner Stabilisatorkombinationen aus einem UV-Stabilisator und einem Antioxidants, z.B. aus 2(2'-Hydroxy-3',5'-di-tert.amyl)benzotriazol und Tetrakis[methylen-3-(3',5'-di-tert.butyl-4'-hydroxyphenyl)propionat]methan. (Advances in Urethane Science and Technology, Volume 4, Seiten 68 ff, und Volume 6, Seiten 103 ff;®Technomic Publishing Co.) Nach Angaben der DD-A-238 992 finden epoxidierte synthetische Produkte, wie epoxidierte Triglyceride, Alkylepoxistearate, -phthalate, -tetrahydrophthalate oder epoxidierte Naturprodukte wie epoxidiertes Sojaöl, Rüböl, Rapsöl u. dgl. Verwendung als Hydrolysestabilisator für PU-Elastomere auf der Grundlage von Polyester-polyolen. Nach Angaben der EP-A-262 527 (US-A-4775558) können gegebenenfalls zellige Polyurethane, die mit anderen Werkstoffen, wie z.B. PVC, ABS, Co- und Homopolymerisaten von Vinylchlorid, Styrol, Butadien, Isopren, Chloropren, Ethylen, Propen oder Acrylnitril, Polyvinylacetat oder Polyvinylbutyral, verbunden oder konfektioniert werden, durch den Zusatz von Epoxiden, vorzugsweise höherfunktionellen Epoxiden mit einem Epoxidäquivalentgewicht von 57 bis 10000, gegen Thermolyse und Kontaktverfärbung stabilisert werden. Durch den Zusatz von Epoxiden zur Herstellung von PU-Elastomeren, das Aufbringen von Polyurethanen auf Epoxidwerkstoffen oder durch Mischung von Polyurethanen mit Epoxidharzen können Kunststoffe mit verbesserten mechanischen Eigenschaften erhalten werden. Obgleich durch den Zusatz von Stabilisatoren die mechanischen Eigenschaften der hergestellten PU-Elastomeren beträchtlich verbessert werden konnten, erfüllen diese vielfach immer noch nicht, insbesondere für spezielle Anwendungsbereiche, die an sie gestellten hohen mechanischen Anforderungen.

Wie bereits ausgeführt wurde, werden die Stabilisatoren üblicherweise den Ausgangsstoffen zur Herstellung der PU-Elastomeren einverleibt, d.h. die PU-Elastomeren werden in Gegenwart der Stabilisatoren hergestellt. Nach Angaben der DE-A-29 01 774 können jedoch anstelle der Stabilisatoren auch rieselfähige, mikrobenbeständige Farbstoff- und/oder Hilfsmittelkonzentrate auf der Grundlage von PU-Elastomeren Verwendung finden, die bis 70 Gew.-% eines Farbstoffs und/oder Hilfsmittels enthalten. Zur Herstellung dieser Konzentrate werden die Aufbaukomponenten zur Bildung der TPU ebenfalls in Gegenwart der Farbstoffe oder/und Hilfsmittel umgesetzt. Nachteilig an dieser Herstellungsart ist, daß die Farbstoffe oder Hilfsmittel unter den Reaktionsbedingungen teilweise zersetzt werden können, sofern diese mit NCO-Gruppen reaktive Reste gebunden haben, eine Reaktion mit den Polyisocyanaten gegeben ist und die homogene Verteilung von größeren Farbstoff- oder Hilfsmittelmengen im PU-Elastomerkonzentrat nicht immer gewährleistet ist.

Die Aufgabe der vorliegenden Erfindung bestand darin, die Stabilisierung von PU-Elastomeren, vorzugsweise TPU, gegen einen mechanischen Abbau und Verfärbung durch Wärme und UV-Bestrahlung weiter zu verbessern.

Die Aufgabe konnte überraschenderweise gelöst werden durch die Verwendung eines Stabilisatorkonzentrats aus ausgewählten Stabilisatoren.

Gegenstand der Erfindung sind somit UV-Stabilisatorkonzentrate, die, bezogen auf das Gesamtgewicht, bestehen aus

A) 40 bis 80 Gew.-%, vorzugsweise 70 bis 80 Gew.-% mindestens eines TPU,

B) 10 bis 30 Gew.-%, vorzugsweise 10 bis 15 Gew.-% 1,3,5-Triglycidylisocyanurat und

C) 10 bis 30 Gew.-%, vorzugsweise 10 bis 15 Gew.-% 1,6-Hexandiyl-bis(3-((3-benzotriazol-N-yl)-4-hydroxy-5-tert.butyl)phenyl-propanoat oder vorzugsweise 2-(2-Hydroxy-3,5-di-tert.amyl-phenyl)-2H-benztriazol oder Mischungen davon.

Durch die Verwendung von 1,3,5-Triglycidylisocyanurat, das analog bekannter Glycidylverbindungen die Hydrolysebeständigkeit von PU-Elastomeren erhöht, in Kombination mit 1,6-Hexandiyl-bis(3-((3-benzotriazol-N-yl)-4-hydroxy-5-tert.butyl)phenyl-propanoat oder vorzugsweise 2-(2-Hydroxy-3,5-di-tert.amyl-phenyl)-2H-benztriazol in Form der erfindungsgemäßen UV-Stabilisatorkonzentrate, wird die Beständigkeit von TPU gegen Wärme und insbesondere UV-Bestrahlung in synergistischer Weise verbessert. Das UV-Stabilisatorkonzentrat ist leicht herstellbar, gut dosierbar und einfach handhabbar.

Um den Stabilisierungseffekt der UV-Stabilisatorkonzentrate nicht durch die PU-Elastomermatrix zu beeinträchtigen, werden zu ihrer Herstellung zweckmäßigerweise TPU (A) mit einer Härte im Bereich von Shore A 78 bis Shore A 98, die einer Härte von Shore D 64 entspricht, vorzugsweise von Shore A 85 bis A 90 verwendet, die erhaltenen werden durch Umsetzung

a) eines organischen Diisocyanats, vorzugsweise 4,4'-Diphenylmethan-diisocyanat mit

b) einer Polyhydroxylverbindung mit einem Molekulargewicht von 800 bis 3000, vorzugsweise von 1000 bis 2500 aus der Gruppe der Polyoxybutylen-glykole, Polybutandiol-1,4-adipate, Polyhexandiol-1,6-adipate und Polybutandiol-1,4-hexandiol-1,6-adipate und

c) einem Alkandiol mit 2 bis 6 Kohlenstoffatomen, vorzugsweise 4 bis 6 Kohlenstoffatomen, insbesondere Butandiol-1,4 als Kettenverlängerungsmittel.

Zur Herstellung der erfindungsgemäßen UV-Stabilisatorkonzentrate haben sich insbesondere nach dem Bandverfahren hergestellte TPU (A) bewährt.

Die Stabilisatoren (B) und (C) werden in dem vorgenannten Prozentbereich zweckmäßigerweise in einem Gewichtsverhältnis von 0,95:1,10 bis 1,10:0,95 und vorzugsweise von 1:1 verwendet.

Aus produktionstechnischer Sicht vorzüglich handhabbar erwies sich ein UV-Stabilisatorkonzentrat, das bestand aus

A) 75 Gew.-% mindestens eines TPU,

B) 12,5 Gew.-% 1,3,5-Triglycidylisocyanurat und

C) 12,5 Gew.-% 2-(2-Hydroxy-3,5-di-tert.amyl-phenyl)-2H-benztriazol

und daher insbesondere Verwendung findet.

Zur Herstellung der erfindungsgemäßen UV-Stabilisatorkonzentrate werden die Stabilisatoren (B) und (C) nacheinander oder vorzugsweise gleichzeitig dem ausreagierten, mindestens fließfähigen, vorzugsweise geschmolzenen TPU (A) bei einer Temperatur von 170 bis 220°C, vorzugsweise von 180 bis 200°C einverleibt. Als geeignete Verarbeitungsvorrichtungen hierfür seien beispielhaft genannt: Walzwerke, Kneter und vorzugsweise Extruder, insbesondere Zweiwellenextruder. Die erhaltenen UV-Stabilisatorkonzentrate können danach zwischengelagert oder direkt granuliert werden, wobei die Granulatpartikel zweckmäßigerweise einen durchschnittlichen Teilchendurchmesser von kleiner als 6 mm, vorzugsweise von 2 bis 4 mm aufweisen.

Die erfindungsgemäßen UV-Stabilisatorkonzentrate finden Verwendung zur Stabilisierung von an sich bekannten, nach dem Extruder- oder Bandverfahren aus üblichen Ausgangsstoffen hergestellten TPU gegen UV- und Thermoabbau.

Hierzu werden die UV-Stabilisatorkonzentrate in einer Menge von 1 bis 12 Gew.-Teilen, vorzugsweise von 2 bis 10 Gew.-Teilen und insbesondere von 3 bis 6 Gew.-Teilen pro 100 Gew.-Teilen TPU, vorzugsweise in Form von Granulaten, bei Temperaturen von 10 bis 220°C intensiv gemischt und die Stabilisatorkonzentrat-TPU-Mischung wird danach bei Temperaturen von 170 bis 220°C, vorzugsweise von 180 bis 210°C thermoplastisch verarbeitet, z.B. nach dem Blasverfahren zu Folien oder dem Spritzgußverfahren zu Formkörpern. Nach einer anderen Verfahrensvariante können die UV-Stabilisatorkonzentrate auch, z.B. mit Hilfe eines Extruders, direkt in die TPU-Schmelze eingebracht, homogen gemischt und zu einem Formkörper extrudiert werden.

Hierbei hat es sich als vorteilhaft erwiesen zur Stabilisierung von thermoplastischen Polyether-PU-Elastomeren UV-Stabilisatorkonzentrate zu verwenden, deren TPU (A)-Weichsegmente aus einem Polyoxybutylen-glykolrest bestehen und in analoger Weise zur Stabilisierung von thermoplastischen Polyester-PU-Elastomeren solche UV-Stabilisatorkonzentrate einzusetzen, bei denen das TPU (A) als Weichsegment einen Polyalkandiol-adipatrest gebunden enthält.

Beispiele

Herstellung der erfindungsgemäßen UV-Stabilisatorkonzentrate.

Beispiel 1

75 Gew.-Teile eines TPU mit einer Härte Shore A von 85, erhalten nach dem Bandverfahren durch Umsetzung von
1000 Gew.-Teilen eines Polyoxybutylen-glykols mit einem Molekulargewicht von 1000,
600 Gew.-Teilen 4,4'-Diphenylmethan-diisocyanat und
126 Gew.-Teilen Butandiol-1,4
wurden in einem Extruder aufgeschmolzen und bei 200°C mit
12,5 Gew.-Teilen 1,3,5-Triglycidylisocyanurat und
12,5 Gew.-Teilen 2-(2-Hydroxy-3,5-di-tert.amyl-phenyl)-2H-benztriazol
intensiv gemischt. Die homogene Mischung wurde extrudiert und granuliert.

Beispiel 2

75 Gew.-Teile eines TPU mit einer Shore Härte D von 54, erhalten nach dem Bandverfahren durch Umsetzung von
1000 Gew.-Teilen eines Polybutandiol-1.4-adipats mit einem Molekulargewicht von 1000,
750 Gew.-Teilen 4,4'-Diphenylmethan-diisocyanat und
218 Gew.-Teilen Butandiol-1,4

wurden in einem Extruder aufgeschmolzen und bei 210°C mit
12,5 Gew.-Teilen 1,3,5-Triglycidylisocyanurat und
12,5 Gew.-Teilen 1,6-Hexandiyl-bis(3-((3-benzotriazol-N-yl)-4-hydroxy-5-tert.butyl)phenyl-propanoat
intensiv gemischt. Die homogene Mischung wurde danach extrudiert und granuliert.

Stabilisierung von TPU

Beispiel 3

Ein TPU-Granulat, das hergestellt wurde nach dem Bandverfahren durch Umsetzung von
1000 Gew.-Teilen eines Polyoxybutylen-glykols mit einem Molekulargewicht von 1000,
600 Gew.-Teilen 4,4'-Diphenylmethan-diisocyanat und
126 Gew.-Teilen Butandiol-1,4
und, bezogen auf das Gesamtgewicht,
1 Gew.-% Tetrakis[methylen(3,5-di-tert.butyl-4-hydroxihydrocinnamat]methan enthielt,
wurde in einem Extruder bei 190°C aufgeschmolzen, mit 4 Gew.-% des UV-Stabilisatorkonzentrats nach Beispiel 1 homogen gemischt und die Reaktionsmischung zu Prüfkörpern verspritzt.
An den erhaltenen Prüfkörpern wurden die in Tabelle 1 genannten optischen und mechanischen Eigenschaften gemessen.

Vergleichsbeispiele I und II

Man verfuhr analog den Angaben des Beispiels 3 verwendete jedoch an Stelle des UV-Stabilisatorkonzentrats
0,5 Gew.-% 1,3,5-Triglycidylisocyanurat, in Tabelle 1 abgekürzt TGIC genannt oder
0,5 Gew.-% 2-(2-Hydroxy-3,5-di-tert.amyl-phenyl)-2H-bentriazol, in Tabelle 1 abgekürzt HPB genannt.
Die an den erhaltenen Prüfkörpern gemessenen optischen und mechanischen Eigenschaften sind in Tabelle 1 zusammengefaßt.

Tabelle 1

| Beispiel | Stabilisator | Verfärbung nach 100 Std. UV-Belichtung nach DIN 75 202 | | mechanische Eigenschaften nach 500 Std. Temperung bei 130°C | | |
|---|---|---|---|---|---|---|
| | | [1]Delta E* nach CIE LAB | [1]YI* Yellowness Index | Zugfestigkeit n. DIN 53 504 [N/mm²] | Bruchdehnung n. DIN 53504 [%] | Weiterreißfestigkeit n. DIN 53 515 [N/mm²] |
| 3 | UV-Stabilisator-Konzentrat gemäß Beispiel 1 | 0,7 | 15,0 | 29 | 740 | 44 |
| Vergleichsbeispiele | | | | | | |
| I | TGIC | 3,5 | 20,1 | 20 | 560 | 38 |
| II | HPB | 5,3 | 18,8 | 14 | 500 | 38 |
| | ohne | 10,5 | 32,0 | 14 | 720 | 36 |

[1] Große Delta E*- und YI-Werte zeigen eine starke Verfärbung an

Beispiel 4

Man verfuhr analog den Angaben des Beispiels 3, verwendete jedoch ein TPU mit einer Härte Shore D von 54, das hergestellt wurde durch Umsetzung von

6

1000 Gew.-Teilen Polybutandiol-1,4-adipat mit einem Molekulargewicht von 1000,
750 Gew.-Teilen 4,4'-Diphenylmethan-diisocyanat und
218 Gew.-Teilen Butandiol-1,4,
und 8 Gew.-% des UV-Stabilisatorkonzentrats nach Beispiel 2.

Die an den hergestellten Prüfkörpern nach UV-Belichtung gemessene Verfärbung wird in Tabelle 2 genannt.

Beispiel 5

Man verfuhr analog den Angaben des Beispiels 3, verwendete jedoch ein TPU mit der Härte Shore D von 60, das hergestellt wurde durch Umsetzung von
1000 Gew.-Teilen Polybutandiol-1,4-adipat mit einem Molekulargewicht von 2500,
880 Gew.-Teilen 4,4'-Diphenylmethan-diisocyanat und
278 Gew.-Teilen Butandiol-1,4
und 8 Gew.-% des UV-Stabilisators nach Beispiel 2.

Die an den hergestellten Prüfkörpern nach UV-Belichtung gemessene Verfärbung wird in Tabelle 2 genannt.

**Tabelle 2**

Verfärbung der TPU nach UV-Belichtung nach DIN 75 202

| Beispiel | | [1] Delta E* nach CIE LAB | |
| --- | --- | --- | --- |
| | | 100 Std. bzw. | 300 Std. UV-Belichtung |
| 4 | TPU mit UV-Stabilisatorkonzentrat | 8,9 | 11,8 |
| | ohne " | 28,4 | 39,2 |
| 5 | TPU mit UV-Stabilisatorkonzentrat | 10,7 | 18,8 |
| | ohne " | 31,2 | 41,1 |

[1] Große Delta E*-Werte zeigen eine starke Verfärbung an

**Patentansprüche**

1. UV-Stabilisatorkonzentrate, bestehend aus, bezogen auf das Gesamtgewicht,
   A) 40 bis 80 Gew.-% mindestens eines thermoplastischen Polyurethans,

B) 10 bis 30 Gew.-% 1,3,5-Triglycidylisocyanurat und

C) 10 bis 30 Gew.-% 2-(2-Hydroxy-3,5-di-tert.amyl-phenyl)-2H-benztriazol und/oder 1,6-Hexandiyl-bis(3-((3-benzotriazol-N-yl)-4-hydroxy-5-tert.butyl)phenyl-propanoat

2. UV-Stabilisatorkonzentrate nach Anspruch 1, dadurch gekennzeichnet, daß die Aufbaukomponente (C) besteht aus 2-(2-Hydroxy-3,5-di-tert.amyl-phenyl)-2H-benztriazol.

3. UV-Stabilisatorkonzentrate nach Anspruch 1, dadurch gekennzeichnet, daß diese die Stabilisatoren 1,3,5-Triglycidylisocyanurat (B) und 2-(2-Hydroxy-3,5-di-tert.amyl-phenyl)-2H-benztriazol oder 1,6-Hexandiyl-bis(3-((3-benzotriazol-N-yl)-4-hydroxy-5-tert.butyl)phenyl-propanoat (C) im Gewichtverhältnis 1:1 enthalten.

4. UV-Stabilisatorkonzentrate nach Anspruch 1, dadurch gekennzeichnet, daß dieses besteht aus
A) 75 Gew.-% mindestens eines thermoplastischen Polyurethans,
B) 12,5 Gew.-% 1,3,5-Triglycidylisocyanurat und
C) 12,5 Gew.-% 2-(2-Hydroxy-3,5-di-tert.amyl-phenyl)-2H-benztriazol.

5. UV-Stabilisatorkonzentrate nach Anspruch 1, dadurch gekennzeichnet, daß die thermoplastischen Polyurethane (A) eine Härte im Bereich von Shore A 78 bis Shore A 98 besitzen und hergestellt werden durch Umsetzung
a) eines organischen Diisocyanats mit
b) einer Polyhydroxyverbindung mit einem Molekulargewicht von 800 bis 3000 aus der Gruppe der Polyoxybutylen-glykole, Polybutandiol-1,4-adipate, Polyhexandiol-1,6-adipate und Polybutandiol-1,4-hexandiol-1,6-adipate und
c) einem Alkandiol mit 2 bis 6 Kohlenstoffatomen als Kettenverlängerungsmittel.

6. UV-Stabilisatorkonzentrate nach Anspruch 1, dadurch gekennzeichnet, daß die thermoplastischen Polyurethane (A) eine Härte im Bereich von Shore A 78 bis Shore A 98 besitzen und hergestellt werden durch Umsetzung von
a) 4,4'-Diphenylmethan-diisocyanat mit
b) einer Polyhydroxylverbindung mit einem Molekulargewicht von 800 bis 3000 aus der Gruppe der Polyoxybutylen-glykole, Polybutandiol-1,4-adipate, Polyhexandiol-1,6-adipate und Polybutandiol-1,4-hexandiol-1,6-adipate und
c) Butandiol-1,4 als Kettenverlängerungsmittel
nach dem Bandverfahren.

7. Verfahren zur Herstellung der UV-Stabilisatorkonzentrate nach Anspruch 1, dadurch gekennzeichnet, daß man die Stabilisatoren (B) und (C) dem geschmolzenen, ausreagierten thermoplastischen Polyurethan bei einer Temperatur von 170 bis 220 ° C einverleibt.

8. Verwendung der UV-Stabilisatorkonzentrate nach Anspruch 1 zur Stabilisierung von thermoplastischen Polyurethanen gegen UV- und Thermoabbau.

9. Verwendung der UV-Stabilisatorkonzentrate nach Anspruch 1 in einer Menge von 1 bis 12 Gew.-Teilen pro 100 Gew.-Teilen des thermoplastischen Polyurethans zur Stabilisierung gegen UV- und Thermoabbau.

**Claims**

1. A UV stabilizer concentrate comprising, based on the total weight,
A) from 40 to 80 % by weight of at least one thermoplastic polyurethane,
B) from 10 to 30 % by weight of 1,3,5-triglycidyl isocyanurate and
C) from 10 to 30 % by weight of 2-(2-hydroxy-3,5-di-tert-amylphenyl)-2H-benzotriazole and/or 1,6-hexanediyl bis(3-((3-benzotriazol-N-yl)-4-hydroxy-5-tert-butyl)phenylpropanoate).

2. A UV stabilizer concentrate as claimed in claim 1, wherein the formative component (C) comprises 2-(2-hydroxy-3,5-di-tert-amylphenyl)-2H-benzotriazole.

3. A UV stabilizer concentrate as claimed in claim 1, containing the stabilizers 1,3,5-triglycidyl isocyanurate (B) and 2-(2-hydroxy-3,5-di-tert-amylphenyl)-2H-benzotriazole or 1,6-hexanediyl bis(3-((3-benzotriazol-N-yl)-4-hydroxy-5-tert-butyl)phenylpropanoate) (C) in a weight ratio of 1:1.

4. A UV stabilizer concentrate as claimed in claim 1, which consists of
   A) 75 % by weight of at least one thermoplastic polyurethane,
   B) 12.5 % by weight of 1,3,5-triglycidyl isocyanurate and
   C) 12.5 % by weight of 2-(2-hydroxy-3,5-di-tert-amyl-phenyl)-2H-benzotriazole.

5. A UV stabilizer concentrate as claimed in claim 1, wherein the thermoplastic polyurethane (A) has a Shore A hardness in the range from 78 to 98 and is prepared by reacting
   a) an organic diisocyanate with
   b) a polyhydroxyl compound having a molecular weight of from 800 to 3000 from the group consisting of polyoxybutylene glycols, poly-1,4-butanediol adipates, poly-1,6-hexanediol adipates and poly-1,4-butanediol 1,6-hexanediol adipates and
   c) an alkanediol having 2 to 6 carbon atoms as chain extender.

6. A UV stabilizer concentrate as claimed in claim 1, wherein the thermoplastic polyurethane (A) has a Shore A hardness in the range from 78 to 98 and is prepared by reacting
   a) 4,4'-diphenylmethane diisocyanate with
   b) a polyhydroxyl compound having a molecular weight of from 800 to 3000 from the group consisting of polyoxybutylene glycols, poly-1,4-butanediol adipates, poly-1,6-hexanediol adipates and poly-1,4-butanediol 1,6-hexanediol adipates and
   c) 1,4-butanediol as chain extender,
   by the belt process.

7. A process for the preparation of a UV stabilizer concentrate as claimed in claim 1, which comprises introducing the stabilizers (B) and (C) into the molten, fully reacted thermoplastic polyurethane at from 170 to 220°C.

8. The use of a UV stabilizer concentrate as claimed in claim 1 for the stabilization of thermoplastic polyurethanes against UV and thermal degradation.

9. The use of a UV stabilizer concentrate as claimed in claim 1 in an amount of from 1 to 12 parts by weight per 100 parts by weight of the thermoplastic polyurethane for stabilization against UV and thermal degradation.

**Revendications**

1. Concentrés de stabilisants contre les radiations ultra-violettes ("UV"), consistant en
   A) 40 à 80 % en poids d'au moins un polyuréthanne thermoplastique,
   B) 10 à 30 % en poids d'isocyanurate de 1,3,5-triglycidyle et
   C) 10 à 30 % en poids de 2-(2-hydroxy-3,5-di-tert-amyl-phényl)-2H-benzotriazole et/ou de 1,6-hexane-diyl-bis-(3-((3-benzotriazole-N-yl)-4-hydroxy-5-tert-butyl)-phényl-propanoate,
   sur leur poids total.

2. Concentrés de stabilisants contre les UV selon la revendication 1, caractérisés en ce que le composant C) consiste en le 2-(2-hydroxy-3,5-di-tert-amyl-phényl)-2H-benzotriazole.

3. Concentrés de stabilisants contre les UV selon la revendication 1, caractérisés en ce qu'ils contiennent les stabilisants isocyanurate de 1,3,5-triglycidyle (B) et 2-(2-hydroxy-3,5-di-tert-amyl-phényl)-2H-benzotriazole ou 1,6-hexane-diyl-bis-(3-((3-benzotriazole-N-yl)-4-hydroxy-5-tert-butyl)-phényl-propanoate (C) dans des proportions relatives en poids de 1:1.

4. Concentrés de stabilisants contre les UV selon la revendication 1, caractérisés en ce qu'ils consistent en
   A) 75 % en poids d'au moins un polyuréthanne thermoplastique,
   B) 12,5 % en poids d'isocyanurate de 1,3,5-triglycidyle et

C) 12,5 % en poids de 2-(2-hydroxy-3,5-di-tert-amyl-phényl)-2H-benzotriazole.

5. Concentrés de stabilisants contre les UV selon la revendication 1, caractérisés en ce que les polyuréthannes thermoplastiques A) ont une dureté Shore A dans l'intervalle de 78 à 98 et sont préparés par réaction de

a) un diisocyanate organique avec

b) un composé polyhydroxylé de poids moléculaire 800 à 3000 pris dans le groupe des polyoxybutylène-glycols, des adipates de polybutane-diol-1,4, des adipates de polyhexane-diol-1,6 et des adipates de polybutane-diol-1,4-hexane-diol-1,6 et

c) un alcane-diol en C2-C6 en tant qu'agent d'allongement des chaînes.

6. Concentrés de stabilisants contre les UV selon la revendication 1, caractérisés en ce que les polyuréthannes thermoplastiques A) ont une dureté Shore A dans l'intervalle de 78 à 98 et sont préparés par réaction de

a) le 4,4'-diphénylméthane-diisocyanate avec

b) un composé polyhydroxylé de poids moléculaire 800 à 3000 pris dans le groupe des polyoxybutylène-glycols, des adipates de polybutane-diol-1,4, des adipates de polyhexane-diol-1,6 et des adipates de polybutane-diol-1,4-hexane-diol-1,6 et

c) le butane-diol-1,4 en tant qu'agent d'allongement des chaînes,

par la technique à la bande.

7. Procédé de préparation des concentrés de stabilisants contre les UV selon la revendication 1, caractérisé en ce que l'on incorpore les stabilisants B) et C) aux polyuréthanne thermoplastique fondu, qui a entièrement réagi, à une température de 170 à 220°C.

8. Utilisation des concentrés de stabilisants contre les UV selon la revendication 1 pour la stabilisation des polyuréthannes thermoplastiques contre les dégradations provoquées par les UV et par la chaleur.

9. Utilisation des concentrés de stabilisants contre les UV selon la revendication 1 en quantité de 1 à 12 parties en poids pour 100 parties en poids du polyuréthanne thermoplastique qu'on veut stabiliser contre les dégradations provoquées par les UV et par la chaleur.